# EUROPEAN PATENT SPECIFICATION

(11) **EP 1 816 110 B1**
(45) Date of publication and mention of the grant of the patent: **15.07.2009**
(21) Application number: 06460041.4
(22) Date of filing: 14.11.2006
(51) Int. Cl.: C04B 35/14, C04B 35/624, C04B 35/622, C04B 35/80

(54) **Ceramic thermal insulation material and method of production thereof**
Keramisches Isoliermaterial und dessen Herstellungsverfahren
Matèriau ceramique isolant et procédé de son fabrication

(30) Priority: 15.11.2005 PL 37804905
(43) Date of publication of application: 08.08.2007
(73) Proprietor: Instytut Technik I Technologii Specjalnych Sp. z o.o., 04-051 Warszawa (PL)
(72) Inventor: Okninski, Roman, 02-496 Warszawa (PL); Strek, Wieslaw, 50-330 Wroclaw (PL)
(74) Representative: Brodowska, Iwona

(56) References cited:
- GB-A- 2 256 192
- PIERRE A C: "Porous Sol-Gel Ceramics" CERAMICS INTERNATIONAL, ELSEVIER, AMSTERDAM, NL, vol. 23, no. 3, 1997, pages 229-238, XP004054864 ISSN: 0272-8842
- CHATTERJEE M ET AL: "Sol-gel alumina fibre mats for high-temperature applications" MATERIALS LETTERS, NORTH HOLLAND PUBLISHING COMPANY. AMSTERDAM, NL, vol. 57, no. 1, November 2002 (2002-11), pages 87-93, XP004392417 ISSN: 0167-577X
- ACKERMAN W C ET AL: "Use of surface treated aerogels derived from various silica precursors in translucent insulation panels" JOURNAL OF NON-CRYSTALLINE SOLIDS, NORTH-HOLLAND PUBLISHING COMPANY, AMSTERDAM, NL, vol. 285, no. 1-3, June 2001 (2001-06), pages 264-271, XP004242933 ISSN: 0022-3093

## Description

The present invention relates to a new, highly porous ceramic thermal insulation material prepared with the sol-gel method (hereinafter referred to as SGCT), containing SiO₂ nanopowders. The subject of the invention is also the method for its obtaining and uses as thermal insulation materials with additional properties, namely, fire-resistance, acoustic dampening and mechanical impact resistance.
Various types of thermal insulation material are known, such as polyurethane foam, porous fiberboard, flax board, glass fiber, chip and cement board, insulation concrete, foam glass, phenol-formaldehyde foam, mineral wool, aerated concrete or foamed polystyrene.
Unfortunately it appears that the above listed materials, despite excellent insulation properties, have a common significant disadvantage, i.e. lack of fire-resistance with no possibility of application in temperatures exceeding 600°C. On the other hand, materials relatively resistant to high temperatures (e.g. aerated concrete) do not have sufficiently low thermal conduction. All the popular materials have many other disadvantages; they are too dense (heavy), or too expensive, or their production technology is too complicated. Additional competitive edge of proposed materials over the above listed ones is that they combine, in a unique way, structural advantages of foamed polystyrene (ease of installation, surface coating) and resistance to thermal exposure (fire-resistance).

Table 1 presents various types of popular thermal insulation materials and their main characteristics, i.e. density and thermal conductivity coefficient.

**Table 1**

| Material | | | Density | Thermal conductivity coefficient |
|---|---|---|---|---|
| Polyurethane foam | | | 40 - 70 | 0.029 - 0.041 |
| porous fiberboard | | | 280 - 320 | 0.058 |
| Flax board | | | 250 - 700 | 0.056 - 0.096 |
| Glass fiber | - wool | | 120 | 0.046 |
| | - mat | | 90 | 0.046 |
| Chip and cement board | | | 350 | 0.090 |
| Insulation concrete | | | 400 - 600 | 0.200 |
| Foamed glass | | | 320 | 0.07 - 0.110 |
| Phenol-formaldehyde foam | | | 30 - 90 | 0.035 - 0.050 |
| MAX hollow bricks | | | | 0.450 |
| Mineral wool | | | | 0.040 - 0.046 |
| Air gap | | | | 0.25 |
| Aerated concrete type 400 (dry/natural humidity) | | | 450/486 | 0.090/0.140 |
| | | type 500 | 555/594 | 0.140/0.210 |
| | | type 600 | 650/702 | 0.160/0.240 |
| | | type 700 | 750/810 | 0.200/0.300 |
| | | type 800 | 850/918 | 0.230/0.370 |
| | | type 900 | 950/1025 | 0.370/0.420 |
| Foamed polystyrene | | | 15 | 0.041 |
| | | | 20 | 0.032 |
| | | | 40 | 0.030 |

During implementation of research projects related to synthesis and properties of sol-gel materials, it turned out that, with the sol-gel method, it is possible to obtain insulation materials with physical and chemical properties, in particular thermal, vitreous and porous, from selected silica materials, allowing for application in thermal and acoustic insulations. Results obtained evidence that SGCT materials feature better utility parameters as compared to those presently applied in industry. While maintaining very low thermal conduction (less than 0,1 W/mK), they also enable to maintain very good insulating properties up to the temperature 900-1000°C. The materials according to the invention have better insulating parameters as compared to traditional insulating materials, including those used in construction of furnaces and heating devices operated with liquid fuel.

GB 2 256 192 relates to a thermal insulation material mouldable by compaction and comprises a mixture of finely-divided particulate silica and fibre reinforcement material, the silica comprising 50-90 wt % of precipitated silica and the balance being pyrogenic silica.

The ceramic thermal insulation material according to the invention is characterized as being made of a hardened and, optionally, foamed sol-gel material containing SiO₂ nanopowder, of a grain size from 10 to 200 nm, in the amount of 5 to 90% of content, and at least 10% by weight of silicon alcoholate and/or soluble glass.

The ceramic thermal insulation material according to the invention can be manufactured with two different sol-gel technologies.
The method for obtaining the ceramic thermal insulation material according to the invention consists in adding SiO₂ nanopowder in quantity from 5 to 90 % by weight to water solution containing at least 10 % by weight of silicon alcoholate and gelation of the sol-gel water suspension with the addition of *this* SiO₂ nanopowder, then specific fluorine compound, acting as porophor, is instilled, advantageously Na₂SiF₆, NH₄F or HF, and/or soluble glass and gel is annealed, advantageously, in temperature 60-100°C, and then colloidal solution is formed in the form of gel of proper shape, which is then treated with water until it emerges to the surface. Subsequently, gel samples removed from water are dried, advantageously for 24 h, in a drier, advantageously at temperature ca. 60°C, and then annealed in a furnace, in air, at temperature from 800 to 1300°C.
In the method according to the invention, fumed silica, as well as processed (ground) industrial silica waste, are used as SiO₂ nanopowder.
Due to the possibility of controlling morphology of the finished product as early as at the stage of hydrolysis and gelation, the method according to the invention enables designing materials on the molecular level.
The technology applied, though difficult in terms of controlling chemical processes, enables utilization of generally accessible and cheap SiO₂ powders in the form of fumed silica and properly processed (ground) industrial silica waste.
The optimum morphology of obtained materials (first of all density and porosity) as well as their chemical resistance at high humidity and temperature were determined. Besides, thermal conduction tests, critical to the project, were performed. Due to the lack of any toxicity of amorphic silica materials no toxicology tests were performed.
During the first stage, series of material samples obtained with both technologies, in different synthesis conditions, hence with different texture properties, were examined.

At the same time morphology of samples and thermal surveys were performed.

During the second stage physical and chemical tests were performed and maximum values of material parameters, such as thermal conduction and attenuation, were determined. The results allowed to focus the research on materials with most promising insulating properties. During the third, last, stage tests of chemical and mechanical resistance of materials obtained in different conditions of synthesis and their optimization with insulating properties were conducted.
Next also technology for forming porous sol-gel ceramic moulding parts with preset dimensions corresponding to selected industrial applications and industrial technology for efficient thermal foaming of sol-gel blocks were developed.
The method according to the invention enables processing post-industrial silica waste and its utilization in the synthesis of sol-gel blocks.
It is certainly possible to adjust both form and some properties of obtained materials to specific industrial applications.
SGCT materials can be applied in compact structures (self-supporting structures) or glued to side surfaces. They require, however, the application of special adhesives resistant to temperatures up to 300°C.

Below are presented exemplary embodiments of the invention.

### Example I.

Hydrolysate was prepared from 41ml Si(OCH₂CH₃)₄) (TEOS), 50 ml H₂O and 1 drop of HCl, mixed for 1 hour with a magnetic mixer until the hydrolysis of TEOS was completed, and, afterwards, mixed with an ultrasonic mixer. I0 g of powdered SiO₂ (0X50 Degussa) was added under slow stirring. The mixture was gelled by adding a fluorine compound (NH₄F = Ig/30ml H₂O), instilled until neutralization, dried in a drier for 24 h at temperature 60°C and, afterwards, annealed in furnace at temperature 1300°C for 0,5 hour.

### Example II.

Hydrolysate was prepared from 24 ml H₂O, 19 ml Si(OCH₂CH₃)₄) (TEOS) and 2 drops of HCl and mixed for 1 hour with a magnetic mixer, and, afterwards, mixed with an ultrasonic mixer. 10g of powdered SiO₂ (0X50 Degussa) was added under slow stirring.

The mixture was gelled by adding soluble glass (5ml of soluble glass/45 ml H₂O), instilled until neutralization, and held for 5-10 min at room temperature, then dried in a drier for 24 hours at temperature 60°C and annealed in furnace at temperature 800°C for 3 hours.

## Claims

1. Ceramic thermal insulation material, **characterized in that** it is composed of hardened and, optionally, foamed sol-gel material containing SiO₂ nanopowder, of a grain size from 10 to 200 nm, in the amount of 5 to 90% by weight, *and at least 10% by weight of silicon alcoholate and*/*or soluble glass.*

2. Method for obtaining the ceramic thermal insulation material, **characterized in that** it consists in adding SiO₂ nanopowder in quantity from 5 to 90 % by weight to water solution containing at least 10% by weight of silicon alcoholate and gelling the sol-gel water suspension with the addition of that SiO₂ nanopowder, then instilling specific fluorine compound, advantageously Na₂SiF₆, NH₄F or HF, and/or soluble glass, acting as porophor, and the gel is annealed, advantageously at temperature 60 - 100°C, and then colloidal solution is formed in the gel form of proper shape and treated with water until it emerges to the surface; and **in that** samples removed from water are dried in a drier, advantageously for 24 h, best at temperature ca. 60°C, and then annealed in furnace, in air, at temperature from 800 to 1300°C

3. Method as in claim 2, **characterized in** applying fumed silica, as well as properly processed industrial silica waste as SiO₂ nanopowder.

## Patentansprüche

1. Das wärmedämmende Keramikmaterial SGCT, das SiO₂ enthält, zeichnet sich **dadurch** aus, dass es sich aus dem gehärteten und ggf. geschäumten Material vom Typ Sol-Gel mit Nanopulver SiO₂ mit der Korngröße von 10 nm bis 200 nm in dem Gewichtsanteil von 5 bis 90% und/oder mit Quarzfaser mit der Fasergröße von 1 µm bis 10 µm in dem Gewichtsanteil von 5 bis 20% zusammensetzt.

2. Die Herstellungsmethode vom wärmedämmenden Keramikmaterial SGCT, das SiO₂ enthält, zeichnet sich **dadurch** aus, dass man zu der Wasserlösung, die zumindest 10% Gewichtsanteil an Siliciumalkoholat enthält, das kolloide Siliciumdioxid in dem Gewichtsanteil von 5 bis 90% beimischt und die Sol-Gel-Wassersuspension unter Zugabe vom Nanopulver SiO₂ geliert. Anschliessend erfolgt tropfenweiser Zusatz einer bestimmten Fluorverbindung als Treibmittel, vorzugsweise Na₂SiF₆, NH₄F bzw. HF und/oder Wasserglas, wonach das Gel, vorzugsweise in der Temperatur zwischen 60-100 °C, durchgewärmt wird. Die kolloide Lösung wird dann als Gel in einer Form entsprechend geformt und mit Wasser temperiert, bis es auf die Oberfläche aufschwimmt. Die aus dem Wasser entnommenen Gelproben werden in einer Trockner getrocknet, vorzugsweise in der Temperatur von 60 °C durch 24 Stunden, und danach in einem Ofen in der Temperatur von 800 bis 1300 °C durchgewärmt.

3. Der Vorbehalt 2 zeichnet sich **dadurch** aus, dass das nach einem Flammverfahren gewonnene Pulver oder der entsprechend verarbeitete industrielle Abfall aus Kieselsäure als das Nanopulver SiO₂ eingesetzt wird.

## Revendications

1. Le matériau thermo-isolant céramique SGCT, contenant du SiO₂, **se caractérisant par le fait qu'**il est constitué par le matériau durci et, éventuellement, moussé de type sol-gel, contenant de la nanopoudre SiO₂ de granulométrie entre 10 et 200 nm, en quantité de 5 à 90% du poids et/ou les fibres de quartz de la taille des fibres de 1 µm à 10 µm en quantité de 5 à 20% du poids.

2. La manière de la fabrication du matériau céramique thermo-isolant contenant du SiO₂, **se caractérisant par le fait qu'**on ajoute de la silice colloïdale en quantité de 5 à 90 % de poids à une solution aqueuse d'au moins 10% de poids d'alcoolates de silicium et on procède à la gélification de la suspension du sol-gel avec l'ajout de la nanopoudre SiO₂. Ensuite on introduit par gouttes un composé défini de fluor en tant que porophore, optimum étant d'employer du Na₂SiF₆, NH₄F ou du HF et/ou du silicate de sodium et l'on chauffe le gel, optimum étant à la température de 60 - 100°C, ensuite la solution colloïdale sous forme de gel est moulée dans un moule approprié et elle est traitée avec de l'eau jusqu'au moment où les pièces fassent surface. Les échantillons de gel sortis de l'eau sont séchés en sécheuse, optimum étant 24h de séchage à une température d'environ 60°C, ensuite chauffés dans un four dont l'air est à une température entre 800 et 1300°C.

3. Manière selon la revendication 2 **se caractérisant par le fait que** la nanopoudre SiO₂ employée ce sont des poudres obtenues par des méthodes à flamme ainsi que les déchets siliceux industriels spécialement traités.
